# EUROPÄISCHE PATENTSCHRIFT

(11) **EP 0 540 555 B1**
(45) Veröffentlichungstag und Bekanntmachung des Hinweises auf die Patenterteilung: **15.05.1996**
(21) Anmeldenummer: 91912792.8
(22) Anmeldetag: 16.07.1991
(51) Int. Cl.: G02F 1/1335, G02B 27/28, H04N 9/31

(54) **EINRICHTUNG ZUR BELEUCHTUNG MIT POLARISIERTEM LICHT**
POLARIZED LIGHT LIGHTING DEVICE
DISPOSITIF D'ECLAIRAGE A LUMIERE POLARISEE

(30) Priorität: 24.07.1990 DE 4023452
(43) Veröffentlichungstag der Anmeldung: 12.05.1993
(73) Patentinhaber: Deutsche Thomson-Brandt GmbH, D-78003 Villingen-Schwenningen (DE)
(72) Erfinder: ROBILLARD, Christophe, F-78160 Marly-le-Roi (FR); AYARI, Suzann, D-7710 Donaueschingen (DE); MARCELLIN-DIBON, Eric, D-7730 Villingen-Schwenningen (DE)
(86) Internationale Anmeldenummer: EP9101329
(87) Internationale Veröffentlichungsnummer: WO9201969

(56) Entgegenhaltungen:
- DE-B- 1 014 836
- US-A- 1 887 650
- US-A- 3 512 868
- US-A- 4 798 448
- PATENT ABSTRACTS OF JAPAN, Band 12, Nr. 293 (E-645)[3140], 10. August 1988 ; & JP-A-6 367 979

## Beschreibung

Die vorliegende Erfindung betrifft eine Einrichtung zur Beleuchtung eines Gegenstandes mit polarisierten Licht nach dem Oberbegriff des Anspruchs 1.

Es ist bekannt, daß für bestimmte Anwendungen linear polarisiertes Licht benötigt wird. Zur Erzeugung von linear polarisiertem Licht kann beispielsweise eine elektrische Glühlampe dienen, die üblicherweise unpolarisiertes Licht abgibt. Mit Hilfe von Polarisationsmitteln, wie beispielsweise einem Polarisator oder einem Polarisationstrahlteiler (PBS), kann der Lichtanteil der gewünschten Polarisationsrichtung selektiert werden.

Polarisiertes Licht wird in vielen Bereichen verwendet, wie beispielsweise zur Untersuchung von Glaskörpern auf mechanische Spannungen. Neben weiteren Anwendungen kann polarisiertes Licht zur Beleuchtung von Flüssigkristallanzeicen (LCD) verwendet werden, welche auch als Teil eines Projekticnssystemes eingesetzt werden können.

Obwohl im folgenden die vorliegende Erfindung mit Hilfe eines solchen LCD-Projektionssystems beschrieben wird, sei darauf hingewiesen, daß das erfindungsgemäße Beleuchtungssystem nicht auf derartige Anwendungen beschränkte ist.

Die Bestrahlung mit polarisierten Licht und hoher Lichtausbeute wird beispielsweise bei Projektionssystemen gefordert, die sogenannte Flüssigkristallmodulatoren, auch Lichtventile genannt, aufweisen.

Zur Darstellung von farbigen Bildsignalen sind solche Projektionssysteme bekannt, die die von einer Lichtquelle ausgehende Lichtstrahlung durch Farbfilter, wie dichromatische Spiegel in drei Spektralbereiche, für rotes, grünes und blaues Licht, aufteilen und durch geeignte Lichtmodulatoren jeweils modulieren. Die derart modulierte Strahlung wird durch ein Linsensystem auf ein Reflexions- oder Transmissionsmedium, wie beispielsweise einen Bildschirm projiziert, so daß die roten, grünen und blauen Lichtanteile gut zueinander justiert sind.

Aus SID 89 Digest, Seite 114 bis 117 ist nach einem Artikel von J. Kobayashi et al. ein Rückprojektionsfernseher bekannt, der als Lichtmodulatoren hochauflösende a-Si TFT-LCD-Felder (panels) verwendet. Ein geeignetes optiscnes System bestehend aus mehreren Spiegeln Feld sowie Projektionslinsen ist dort ebenfalls angegeben.

Weiterhin wird in der Europäischen Offenlegungsschrift EP 258 927 A2 ein Anzeigesystem vorgestellt, das zur Projektion in Fernseh- und Videosystemen geeignet ist.

Es enthält mindestens zwei Lichtventile. Diese haben die Eigenschaft, daß einzelne Bildpunkte (pixel) durch Anlegen von Spannungen oder Strömen an entsprechende Anschlüsse moduliert werden können. Wenn diese Lichtventile von einer Seite mit Licht bestrahlt und durch Projektionslinsen auf einen Vor- oder Rückprojektionsschirm abgebildet werden, kann das von der Ansteuerung der einzelnen Bildpunkte gegebene Bild sichtbar gemacht werden.

Die genannte Offenlegungsschrift gibt ebenfalls an, wie der Wirkungsgrad bei Verwendung von polarisierten Licht, das durch einen sogenannten Polarisationsstrahlteiler aus einer Lampe gewonnen wird, verbessert werden kann.

Weiterhin ist aus SID 90 Digest, Seite 324 bis 326 nach einem Artikel von M. Schadt et al. eine Lichtquelle für polarisiertes Licht bekannt, das einen sogenannten cholesterischen Flüssigkristallfilter verwendet.

Es ist aus US-A-3 512 868 und US-A-4 798 448 eine Einrichtung zur Beleuchtung eines Lichtventils mit einer Lampe bekannt.

Weiterhin wird in der EP 258 927 A2 ein Beleuchtungssystem vorgestellt, das zwei nebeneinander angeordnete Lampen verwendet.

Die aus dem Stand der Technik bekannten Beleuchtungssysteme führen aufgrund der Geometrie des abgegebenen Lichtstrahls, der üblicherweise kreissymmetrisch ist, und der Geometrie der zu beleuchtenden rechteckförmigen Lichtventile, die üblicherweise ein Seitenverhältnis von 4:3 oder 16:9 aufweisen, in Abhängigkeit von dem Seitenverhältnis zu hohen Verlusten.

Soll zur Beleuchtung der Lichtventile polarisiertes Licht verwendet werden, so können die Polarisationsmittel, beispielsweise Polarisationsstrahlteiler, vorteilhafterweise derart ausgebildet sein, daß sie die Aufteilung und Ablenkung zweier Teilstrahlen bewirken. Bei einer Ausgestaltung der Erfindung, bei der mindestens zwei Lampen verwendet werden, ergibt sich einerseits der Vorteil, daß die einzelnen Lampen bei gleicher Ausleuchtung des Lichtventiles weniger stark beansprucht werden, und daß andererseits bei Ausfall einer Lampe die Funktion des Beleuchtungssystems durch die andere Lampe aufrechterhalten bleibt.

Bei Verwendung von Lampen geringerer Nennleistuna ergibt sich weiterhin der Vorteil, daß sie eine höhere Lichtbündelung aufweisen. Das führt zu einer kleineren Leuchtfläche und damit zu geringeren Verlusten.

Weiterhin können die Fokussiermittel, die das Licht einer Lampe bündeln, derart gestaltet sein, daß sie als Umlenkmittel eines Teilstrahls mindestens einer weiteren Lampe dienen. Dadurch können zusätzliche Mittel eingespart und die Lichtausbeute erhöht werden.

Durch zusätzliche Fokussiermittel, wie beispielsweise Linsensysteme, kann die Lichtausbeute der erfindungsgemäßen Vorrichtung weiter erhöht werden.

Durch Mittel, die eine überhitzung des Systems vermeiden, können dessen Lebensdauer und deren langzeitiger Wirkungsgrad erhöht werden.

Bei gleichzeitiger Beleuchtung meherer Lichtventile, wird eine Wiedergabe von Farbbildern ermöglicht.

Die aus dem Stand der Technik bekannten Beleuchtungssysteme weisen nicht die für einen Dauerbetrieb notwendige Zuverlässigkeit auf.

Es ist die Aufgabe der vorliegenden Erfindung, eine Einrichtung zur Beleuchtung mit polarisierten Licht vorzustellen, die eine erhöhte Zuverlässigkeit aufweist.

Diese Aufgabe wird bei einer gattungsgemäßen Einrichtung durch die Merkmale des Anspruchs 1 sowie die Merkmale des nebengeordneten Anspruchs 2 gelöst.

Erfindungsgemäß wird einerseits vorgeschlagen, daß das Licht einer Lichtquelle, wie beispielsweise einer Halogen-Metalldampf- (metal halide) Lampe, mit Hilfe von Fokussiernitteln gebündelt und mit Hilfe von Polarisationsmitteln aufgespalten wird in eine Nutzstrahlung, welche eine erste Polarisationsrichtung aufweist, und in eine Komplementärstrahlung, welche eine zweite Polarisationsrichtung aufweist.

Als Polarisationsrichtung wird in diesem Zusammenhang sowohl die Richtung von Feldvektoren von linear polarisierten Licht als auch die Drehrichtung von zirkular (elliptisch) polarisiertem Licht bezeichnet.

Dabei wird die Nutzstrahlung auf zu beleuchtende Mittel, wie beispielsweise ein Lichtventil, gelenkt und die Komplementärstrahlung wird derart umgelenkt, daß dabei auftretende Reflexions- bzw. Transmissionsvorgänge zu einer Änderung der Polarisationsrichtung führen. Die neue Polarisationsrichtung der Komplementärstrahlung verläuft zumindest teilweise derart wie die Polarisationsrichtung der Nutzstrahlung.

Unter Änderung der Polarisationsrichtung ist in diesem Zusammenhang zu verstehen, daß bei linear polarisierter Nutzstrahlung die neue Polarisationsrichtung der Komplementärstrahlung Komponenten aufweist, die in der Richtung der ersten Polarisationsrichtung verlaufen. Das wird üblicherweise durch eine Depolarisierung erreicht.

Dabei ist es bei einer ersten erfindungsgemäßen Version wesentlich, daß die Veränderung der Polarisationsrichtung der Komplementärstrahlung dadurch erzielt wird, daß sie auf einer rauhen Oberfläche reflektiert wird bzw. diese durchstrahlt.

Unter rauher Oberfläche wird in diesem Zusammenhang eine Oberfläche verstanden, die Unebenheiten aufweist mit Abmessungen, deren Größenordnungen oberhalb der Wellenlänge des verwendeten Lichtes liegen.

Aufgrund der Tatsache, daß die Drehung der Polarisationsrichtung an einer rauhen Oberfläche erfolgt, kann auf Mittel, die linear polarisierte Strahlung in zirkular polarisierte Strahlung umwandeln, wie beispielsweise Lambda-Viertel-Plättchen, welche üblicherweise stark wellenlängenabhängig sind, bei dieser Lösung verzichtet werden.

Durch die Verminderung der Anzahl von Mitteln die exakt justiert sein müssen läßt sich somit die Zuverlässigkeit von Beleuchtungseinrichtungen der genannten Art erhöhen.

Bei einer zweiten erfindungsgemäßen Version wird die Zuverlässigkeit des erfindungsgemäßen Beleuchtungssystems dadurch verbessert, daß eine zweite Lichtquelle vorgesehen ist mit eigenen Fokussiermitteln. Diese Fokussiermittel werden zusätzlich dazu verwendet, die Komplementärstrahlung der ersten Lichtquelle umzulenken. Weiterhin wird die Komplementärstrahlung der zweiten Lichtquelle durch die Fokussiermittel der ersten Lichtquelle umgelenkt.

Bei Verwendung von zwei Lichtquellen mit eigenen Fokussiermitteln kann die Verwendung von Mitteln, die linear polarisierte Strahlung in zirkular polarisierte Strahlung umwandeln, vorgesehen sein. Da zirkular polarisierte Strahlung durch Reflexion ihre Polarisations-Drehrichtung ändert, kann durch anschließende Durchstrahlung von Mitteln, die die zirkular polarisierte Strahlung in linear polarisierte Strahlung umwandeln, ebenfalls die lineare Polarisationsrichtung geändert werden.

Sowohl die Änderung von linear polarisierter in zirkular polarisierte Strahlung als auch umgekehrt, kann jeweils durch ein Lambda-Viertel-Plättchen erfolgen. Bei geeigneter Strahlführung können beide Umwandlungen durch ein einziges Lambda-Viertel-Plättchen bewirkt werden.

Die Verwendung von zwei Lichtquellen hat weiterhin den Vorteil, daß zur Erzielung einer vorgegebenen Lichtstärke, die Lichtquellen mit einer Leistung betrieben werden können, welche unterhalb derer liegt, die bei Verwendung von nur einer Lichtquelle notwendig wäre.

Ein weiterer Vorteil der Verwendung von zwei Lichtquellen, wobei das Fokussiermittel der einen Lampe als Umlenkmittel auch für die Strahlung der anderen Lichtquelle dient (bzw. umgekehrt), liegt darin, daß eine Erwärmung der Lichtquelle in größerem Umfange erfolgt, als es durch ihre eigene Verlustleistung gegeben ist. Dadurch ist es eventuell möglich, mit kleineren Ansteuerleistungen die verwendeten Lichtquellen nicht unterhalb ihrer Betriebstemperatur zu betreiben.

Zur Erhöhung der Strahlungsgleichmäßigkeit werden vorteilhafterweise Lichtquellen mit einem angerauhten bzw. milchigen (frosted) Lampenkolben, der, sofern er aus Glas besteht auch Glaskolben genannt wird, verwendet. Eine derartige rauhe Oberfläche kann zur Depolarisierung der Komplementärstrahlung verwendet werden.

Eine starke Beanspruchung üblicher Lichtquellen, wie beispielsweise der genannten Halogen-Metalldampf-Lampen, besteht insbesondere dann, wenn nach einem kurzzeitigen Ausschalten erneut ein Wiedereinschalten erfolgt. Bei der Verwendung von zwei Lichtquellen besteht weiterhin die Möglichkeit, daß diese alternierend angesteuert werden. Diese Lösung hat den besonderen Vorteil, daß die Ausschaltperiode der einzelnen Lichtquelle verlängert werden kann und damit ihre Lebensdauer erhöht wird.

Ein weiterer Vorteil besteht darin, daß eine abgekühlte Halogen-Metalldampf-Lampe beim Einschalten eine geringere Zündspannung benötigt als eine "heiße" Lampe. üblicherweise werden bei einer abgekühlten Lampe weniger als 10 kilovolt und bei einer "heißen" Lampe mehr als 20 kilovolt benötigt. Somit kann, wenn die betriebsübliche Einschalttemperatur herabgesetzt wird, ein Netzteil kleinerer Leistung verwendet werden, wodurch Herstellungs- und Betriebskosten eingespart werden können.

Bei Verwendung von zwei Lichtquellen, deren Nutzstrahlung unterschiedliche Polarisationsebenen aufweisen, kann bei Einschalten der einen oder der anderen Lichtquelle ein normales oder ein inverses Bild einer LCD-Anzeige bewirkt werden.

Werden als Polarisationsmittel Spiegelelemente verwendet, welche jeweils transparent sind für Lichtanteile eines vorgegebenen Nutz-Wellenlängenbereichs und Lichtanteile anderer Komplementär-Wellenlängenbereiche reflektieren (dichroitische Spiegel), so hat das insbesondere den Vorteil, daß eine übermäßige Erwärmung des Systems verringert wird.

Sind Spiegelelemente der genannten Art mit kleinen lateralen Abmessungen für verschiedene Nutz-Wellenlängenbereiche im Strahlengang eines Nutzstrahls angeordnet, so können die gewünschten Nutz-Wellenlängenbereiche (Rot, Grün, Blau) ohne besondere Umlenkmittel erhalten werden.

Weitere Merkmale, Vorteile und Einzelheiten der Erfindung werden in den folgenden Ausführungsbeispielen anhand der Zeichnung erläutert. Dabei zeigen
- Fig. 1: ein erstes Ausführungsbeispiel mit einer einzigen Lichtquelle;
- Fig. 2: ein zweites Ausführungsbeispiel das zwei elektronisch angesteuerte Lichtquellen mit eigenen Fokussiermitteln aufweist;
- Fig. 3: das Flußdiagramm eines Verfahrens zur alternierenden Ansteuerung von zwei Lichtquellen;
- Fig. 4: das Flußdiagramm eines Verfahrens zur überwachung der Funktionsfähigkeit von Lichtquellen;
- Fig. 5: ein drittes Ausführungsbeispiel mit zwei Lichtquellen und aufgeweiteten Nutzstrahl;
- Fig. 6: ein viertes Ausführungsbeispiel mit dichroitischen Spiegelelementen;
- Fig. 7: ein fünftes Ausführungsbeispiel mit abgewinkelten Polarisationsstrahlteilern.

Im folgenden werden Mittel, Signal- sowie Strahlverläufe, die die gleichen Bedeutungen haben, in den Figuren jeweils mit denselben Referenzzeichen versehen und auf sie wird, wenn sie einmal beschreiben wurden, in der weiteren Beschreibung nur insoweit eingegangen, wie es für das Verständnis der vorliegenden Erfindung notwendig ist.

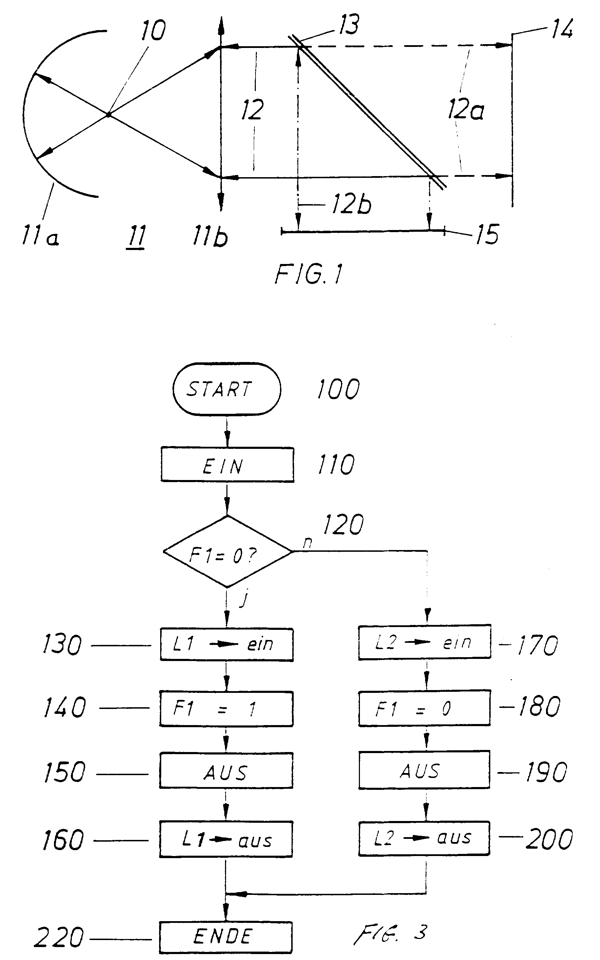

Figur 1 zeigt ein erstes Ausführungsbeispiel mit einer einzigen Lichtquelle 10. Das von ihr abgegebene Licht wird durch ein Fokussiermittel 11, in diesem Ausführungsbeispiel bestehend aus einem sphärischen Hohlspiegel 11a, dessen Brennpunkt mit der Position der Lichtquelle 10 zusammenfällt, und einer Linse 11b, deren Brennpunkt ebenfalls mit der Position der Lichtquelle 10 zusammenfällt, zu einem parallelen Lichtstrahl gebündelt. Dieser gelangt zu einem Polarisationsmittel 13, das in diesem Ausführungsbeispiel als sogenannter Polarisationsstrahlteiler ausgebildet ist und den Lichtstrahl 12 aufteilt
- in einen Nutzstrahl 12a (Nutzstrahlung) mit erster Polarisationsrichtung, welcher mit erster Polarisationsrichtung zu einem zu beleuchtenden Mittel 14, wie beispielsweise einem LCD-Lichtventil, gelangt und
- in einen Komplementärstrahl 12b (Komplementärstrahlung) mit einer zweiten Polarisationsrichtung, der zu einem mit einer zweiten Polarisationsrichtung Spiegel 15 gelangt.

Der Komplementärstrahl 12b wird durch den Spiegel 15 zurückreflektiert auf den Polarisationsstrahlteiler 13 und von diesem anschließend zu der Linse 11b umgelenkt. Diese fokussiert den umgelenkten Komplementärstrahl 12b auf die Lichtquelle 10, die in diesem Ausführungsbeispiel einen Glaskörper mit rauher Oberfläche aufweist. Durch Durchstrahlung dieser rauhen oder auch milchigen Oberfläche wird der umgelenkte Komplementärstrahl 12b depolarisiert und weist damit Komponenten der ersten Polarisationsrichtung auf. Der dadurch entstandene Lichtstrahl gelangt wiederum zu dem Hohlspiegel 11a und anschließend zu der Linse 11b und verläßt die Fokussiermittel 11 wiederum als paralleler Lichtstrahl als Teil des Lichtstrahls 12. Da Komponenten der ersten Polarisationsrichtung vorhanden sind, wird durch den Polarisationsstrahlteiler 13 erneut eine Aufteilung vorgenommen, in die gewünschte Polarisationsrichtung des Nutzstrahls 12a und in die Polarisationsrichtung des Komplementärstrahls 12b.

Stellt man sich vor, daß die Lichtquelle 10 nur für einen kurzen Zeitraum Lichtstrahlung abgegeben hat, so wird diese durch den Polarisationsstrahlteiler 13 entweder direkt auf das LCD-Lichtventil 14 als Nutzstrahl 12a gelenkt, oder aber als Komplementärstrahl 12b solange umgelenkt mittels des Spiegels 15, des Polarisationsstrahlteilers 13, der Linse 11b, des Glaskörpers der Lichtquelle 10 und des Hohlspiegels 11a, bis nahezu alles von der Lichtquelle erzeugte Licht als Nutz-Lichtstrahl 12a zu dem LCD-Lichtventil 14 gelangt ist.

Anzumerken sei, daß bei der oben durchgeführten überlegung Absorptionsvorgänge nicht berücksichtigt wurden. Bei einem tatsächlichen Betrieb der Lichtquelle 10 überlagern sich der Strahl 12 und der umgelenkte Komplementärstrahl 12b ungestört.

Wesentlich bei diesem Ausführungsbeispiel ist, daß Komponenten der ersten Polarisationsrichtung durch Durchstrahlungs-und Reflexionsvorgänge an dem rauhen Glaskörper der Lichtquelle 10 bewirkt werden.

Figur zeigt ein zweites Ausführungsbeispiel, das eine erste Lichtquelle 10 und eine zweite Lichtquelle 20 aufweist. Das Licht der ersten Lichtquelle 10 wird mit Hilfe der ersten Fokussiermittel 11 gebündelt. Das Licht der zweiten Lichtguelle 20 wird mit Hilfe von zweiten Fokussiermitteln 21, bestehend aus einem zweiten Hohlspiegel 21a und einer zweiten Linse 21b gebündelt. Der erste Lichtstrahl 12 wird aufgeteilt in den ersten Nutzstrahl 12a mit der ersten Polarisationsrichtung und in den ersten Komplementärstrahl 12b mit der zweiten Polarisationsrichtung. Der zweite Lichtstrahl 22 wird mit Hilfe eines zweiten Polarisationsstrahlteilers 23 aufgeteilt in einen zweiten Nutzstrahl 22a und einen zweiten Komplementärstrahl 22b. Die beiden Nutzstrahlen 12a, 22a gelangen zu dem LCD-Lichtventil 14.

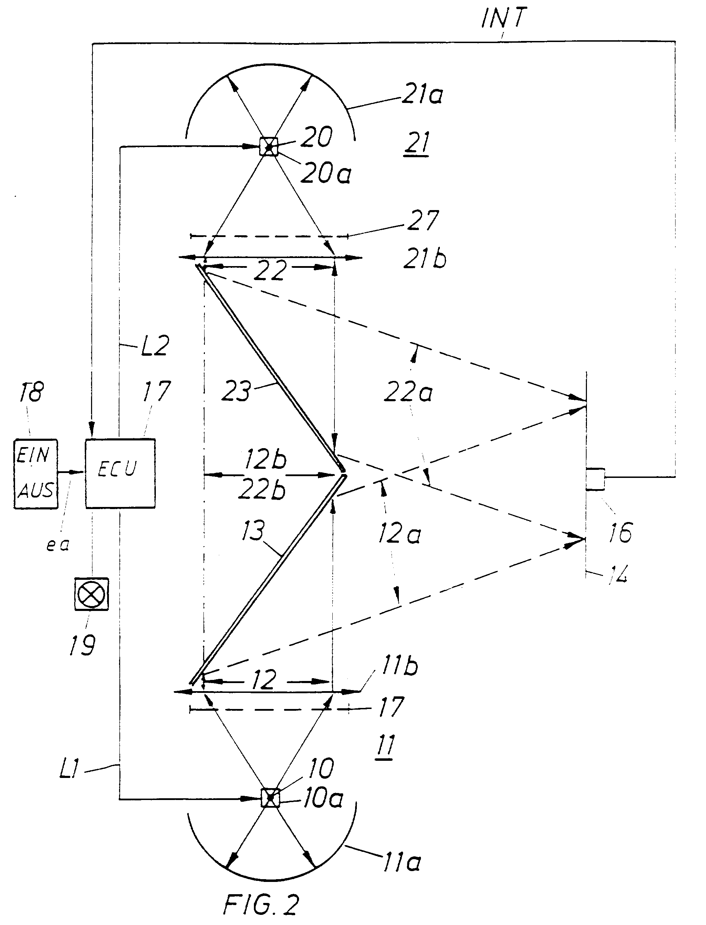

Für eine zweite Version dieses Ausführungsbeispiels sind ein erstes Lambda-Viertel-Plättchen 17 zwischen der ersten Lichtquelle 10 und dem ersten Polarisationsstrahlteiler 13 sowie ein zweites Lambda-Viertel-Plättchen 27 zwischen der zweiten Lichtquelle 20 und dem zweiten Polarisationsstrahlteiler 23 vorgesehen. Diese sind in Figur 2 gestrichelt eingezeichnet.

Weiterhin ist ein Lichtsensor 16 vorgesehen, der die Intensität der Strahlen 12a, 22a erfaßt. Dieser Sensor 16 gibt Signale INT, die ein Maß sind für die Lichtintensität am Eingang des Sensors 16, an ein elektronisches Steuergerät (ECU) 17 ab. Das elektronische Steuergerät 17 ist weiterhin mit einer Eingabe/Ausgabe-Einheit 18 verbunden, von der sie Signale ea erhält.

In Abhängigkeit von den Signalen INT bzw. ea steuert das elektronische Steuergerät 17 mittels eines Signales L1 erste Versorgungsmittel 10a an, welche die erste Lichtquelle 10 mit der notwendigen elektrischen Energie versorgen. Das elektronische Steuergerät 17 steuert weiterhin mittels eines Signales L2 zweite Versorgungsmittel 20a an, die die zweite Lichtquelle 20 mit der gewünschten elektrischen Energie versorgen.

Im einfachsten Fall können die Versorgungsmittel 10a, 20a als Lampenfassungen für die Lichtquellen 10, 20 ausgebildet sein. Die Signale L1, L2 entsprechen in diesem Fall den Versorgungsspannungen für die verwendeten Lichtquellen. Eine Änderung der Werte der Signale L1, L2 kann durch Änderung von deren Spannungen und/oder deren Strömen erfolgen.

Es ist weiterhin denkbar, daß die Versorgungsmittel 10a, 20a mit nicht-dargestellten elektrischen Versorgungseinrichtungen verbunden sind und die Lichtquellen in Abhängigkeit von Werten der Ansteuersignale L1, L2 mit der gewünschten Energiemenge versorgen. Die Werte der Ansteuersingale L1, L2 können durch analoge und/oder digitale Modulation eingestellt werden.

über eine Anzeigevorrichtung 19, die als einfache Lampe oder als alphanumerisches Anzeigefeld ausgebildet sein kann, können normale Betriebszustände, sowie Alarmzustände signalisiert werden.

Denkbar ist ebenfalls, daß die Anzeigevorrichtung als Teil des LCD-Lichtventils 14 integriert ist.

Zunächst wird der Verlauf des von der ersten Lichtquelle 10 abgegebenen Lichtes erläutert. Dieses wird mittels der ersten Fokussiermittel 11 gebündelt zu dem ersten Lichtstrahl 12, der durch den ersten Polarisationsstrahlteiler 13 aufgespalten wird in den ersten Nutzstrahl 12a und den Komplementärstrahl 12b. Dieser erste Komplementärstrahl 12b passiert den zweiten Polarisationsstrahlteiler 23 unverändert und gelangt zu der zweiten Linse 21b, welche ihn zu der zweite Lichtquelle 20 umlenkt. Dort wird die Polarisationsrichtung des ersten Komplementärstrahls 12b durch die Reflexion an der rauher Oberfläche des Glaskörpers derart verändert, daß nach Umlenken mittels des zweiten Hohlspiegels 21a und der zweiten Linse 21b dieser als Teil des zweiten Lichtstrahles 22 zu dem zweiten Polarisationsstrahlteiler 23 gelangt und von diesem derart aufgespalten wird, daß ein erster Teil als Nutzstrahl zu dem LCD-Lichtventil 14 und ein zweiter Teil als Komplementärstrahl analog wie der zweite Komplementärstrahl 22b verläuft.

Stellt man sich wiederum vor, daß die erste Lichtquelle 10 nur für einen kurzen Zeitraum eingeschaltet war, so verläuft das von ihr abgegebene Licht entweder direkt, als Nutzstrahl 12a auf das LCD-Lichtventil 14, oder aber es wird solange zwischen den ersten und den zweiten Fokussiermitteln 11, 21 hin- und herreflektiert, bis nur noch Licht der gewünschten Polarisationsrichtung verbleibt. Dabei wurden Absorptionsprozesse vernachlässigt.

Analoges gilt für die Lichtstrahlung, die von der zweiten Lichtquelle 20 abgegeben wird.

Bei einer zweiten Version dieses Ausführungsbeispieles werden das erste Lambda-Viertel-Plättchen 17 und/oder das zweite Lambda-Viertel-Plättchen 27 benutzt. In diesem Fall kann auf einen rauhen Glaszylinder der ersten bzw. der zweiten Lichtquelle 10, 20 verzichtet werden und es ergeben sich Strahlenverläufe wie im folgenden näher beschrieben.

Wiederum ausgehend von der ersten Lichtquelle 10, gelangt das von ihr abgegebene und durch den ersten Hohlspiegel 12a abgelenkte Licht durch das erste Lambda-Viertel-Plättchen 17, das das Licht ungehindert passiert.

Die lineare Polarisation des ersten Komplementärstrahls 12b, verändert sich nach dem Durchlaufen des zweiten Lambda-Viertel-Plättchens 27 in eine zirkulare Polarisation mit einer ersten Drehrichtung. Diese dreht sich durch die Reflexion an dem zweiten Hohlspiegel 21a um, so daß die umgelenkte Komplementärstrahlung 21b eine zirkulare Polarisation in einer zweiten Drehrichtung aufweist. Diese wird nach erneutem Durchlaufen des zweiten Lambda-Viertel-Plättchen 27 in eine lineare Polarisation verwandelt, deren Polarisationsrichtuna derjenigen des zweiten Nutzstrahles 22a entspricht. Damit wird dieser umgelenkte erste Komplementärstrahl 12b nach zweimaligem Durchlaufen des zweiten Lambda-Viertel-Plättchens 27 und ungradzahliger Reflexion derart umgewandelt, daß er nahezu vollständig auf das LCD-Lichtventil 14 gelenkt wird.

Analoge überlegungen gelten ebenfalls für Lichtstrahlung, welche durch die zweite Lichtquelle 20 abgegeben wird.

Für Weiterbildungen des zweiten Ausführungsbeispiels werden die bereits genannten Steuermittel verwendet.

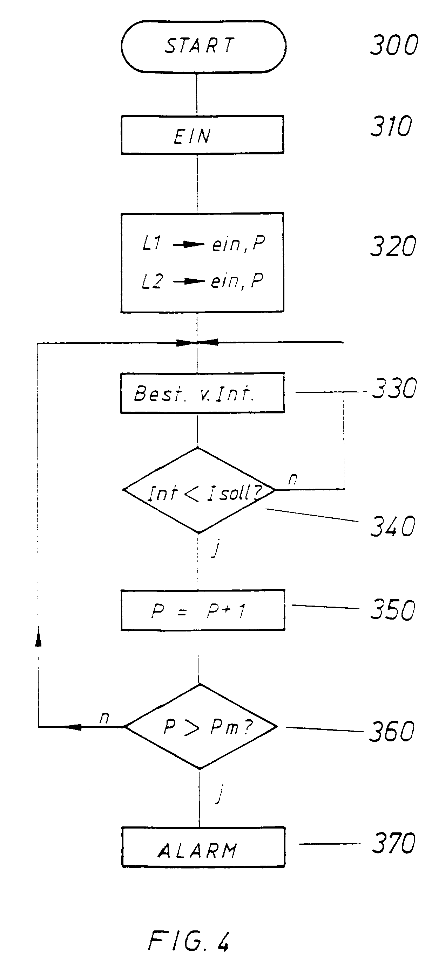

Das elektronische Steuergerät 17 kann mehrere Funktionsabläufe steuern. Ein erstes Beispiel ist durch das Flußdiagramm der Figur 3 angegeben. Nach dem Start in Schritt 100 wird über die Eingabe/Ausgabe-Einheit 18 ein Einschaltimpuls ea an das elektronische Steuergerät 17 abgegeben (Schritt 110). Dieses überprüft daraufhin, ob der Wert für ein Flag F1, das in einem nicht-dargestellten Speicher abgelegt ist, gleich "0" ist (Schritt 120). Falls ja, so fährt das Verfahren bei Schritt 130 fort, der ein Ansteuersignal L1 an die ersten Versorgungsmittel 10a abgibt, wodurch die erste Lichtquelle 10 mit elektrischer Energie versorgt wird.

In Schritt 140 wird das Flag F1 gleich "1" gesetzt. Bei einem "Aus"-Befehl in Schritt 150 wird die erste Lampe durch ein entsprechendes Signal L1 derart angesteuert, daß sie im Schritt 160 ausgeschaltet wird. Wird in Schritt 120 festgestellt, daß das Flag F1 ungleich "0" ist, so fährt das Verfahren bei Schritt 170 fort, indem ein Signal L2 an die zweiten Versorgungsmittel 20a geführt wird, so daß die zweite Lichtquelle 20 mit elektrischer Energie versorgt und eingeschaltet wird.

Anschließend wird in Schritt 180 das Flag F1 gleich "0" gesetzt. Bei einem Ausschalt-Befehl in Schritt 190 wird ein entsprechendes Signal L2 abgegeben, so daß die zweite Lichtquelle 20 ausgeschaltet wird (Schritt 200). Bei dem anschließenden Schritt 210, der ebenfalls nach dem Schritt 160 folgt, endet das Verfahren.

Ein zweiter beispielhafter Funktionsablauf, der durch das elektronische Steuergerät 17 und angeschlossenen Mittel verwirklicht werden kann, ist durch das Flußdiagramm der Figur 4 dargestellt.

Nach dem Start in Schritt 300 folgt ein Einschalt-Befehl in Schritt 310 über die Eingabe/Ausgabe-Einheit 18. Daraufhin werden sowohl die erste Lichtquelle 10 als auch die zweite Lichtquelle 20 durch ein entsprechendes Signal L1 bzw. L2 angesteuert. Der Wert dieser Signale L1, L2 entspricht einem vorgegebenen Wert für die elektrische Leistung, die durch die Versorgungseinheiten 10a, 20a an die Lichtquellen 10 bzw. 20 abgegeben werden sollen (Schritt 320). Durch den Lichtsensor 16, der auch als Teil des LCD-Lichtventiles 14 integriert sein kann, wird die gesamte Lichtintensität der beiden Nutz-Lichtstrahlen 12a, 22a gemessen (Schritt 330). Der Wert des von ihm abgegebenen Signales INT wird verglichen mit einem Intensitäts-Sollwert Isoll im Schritt 340. Ist der Wert der gemessenen Intensität größer oder gleich dem Sollwert; so führt das Verfahren zurück zu Schritt 330.

Wird andererseits in Schritt 340 festgestellt, daß der Wert der gemessenen Lichtintensität kleiner als der Intensität-Sollwert Isoll ist, so fährt das Verfahren bei Schritt 350 fort, indem der Wert des Ansteuersignales für die elektrische Leistung erhöht wird. Hat der in Schritt 350 bestimmte Wert einen Maximalwert Pm noch nicht erreicht, so führt das Verfahren von Schritt 360 zurück zu Schritt 33C, so daß erneut die Schritte 330 bis 360 durchlaufen werden.

Wird andererseits in Schritt 360 festgestellt, daß der Wert des Leistungsansteuersignales P bereits größer als der Maximalwert Pm ist, so wird über die Anzeigevorrichtung 19 ein Alarmzustand signalisiert (Schritt 370).

Bei Versionen des in Figur 4 dargestellten Verfahrens kann beispielsweise durch gezieltes Abschalten der ersten oder der zweiten Lichtquelle 10, 20 eine Analyse durchgeführt werden zur Feststellung in welchem der beiden Bereiche der Lichtauellen 10, 20 ein Fehlerzustand vorliegt.

Weiterhin ist denkbar, daß statt des einen Sensors 16 zwei Sensoren, die hier in den Figuren nicht dargestellt sind, vorgesehen sind, welche die Lichtstrahlung der ersten bzw. zweiten Lichtquelle einzeln überprüfen.

Weitere Varianten, die eine dem Fachmann bekannte überprüfung vornehmen sind ebenfalls als Teil dieses Funktionsablaufes denkbar.

Kombinationen der genannten Funktionsabläufe sind besonders vorteilhaft.

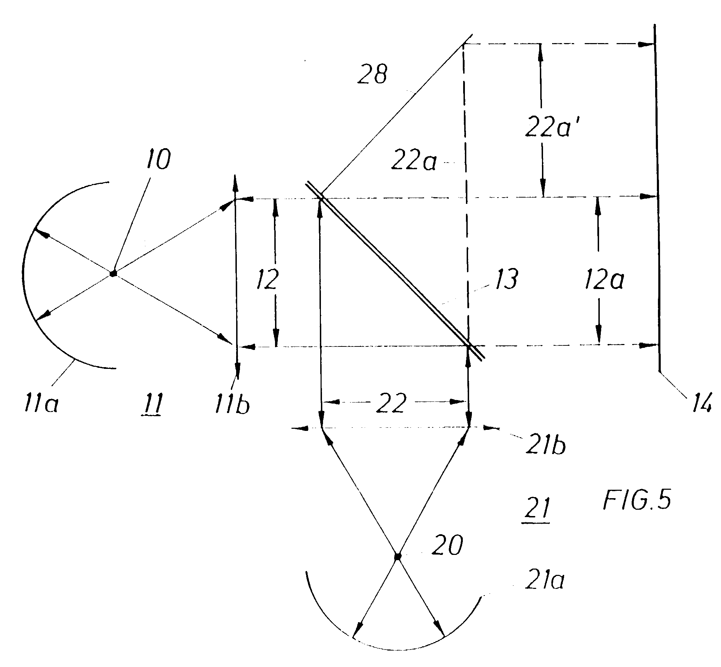

Ein drittes Ausführungsbeispiel der erfindungsgemäßen Beleuchtungseinrichtung ist in Figur 5 dargestellt. Dabei sind lediglich die Verläufe der Lichtstrahlen angegeben, die von der ersten und der zweiten Lichtquelle abgegeben und durch die eingezeichneten Mittel umgeformt werden. Die elektrische Ansteuerung und entsprechende überwachungsverfahren können ähnlich ablaufen wie in dem vorgenannten Ausführungsbeispiel beschrieben.

Der wesentliche Unterschied bei diesem Ausführungsbeispiel besteht darin, daß die erste Lichtquelle 10 und die zweite Lichtquelle 20 mit entsprechenden Fokussierungsmitteln 11 bzw. 21 vorgesehen sind, daß jedoch die von diesen abgegebenen Lichtstrahlen durch nur einen Polarisationsstrahlteiler 13 in einen ersten Nutzstrahl 12a und einen zweiten Nutz-Lichtstrahl 22a aufgeteilt werden. Da diese beiden Lichtstrahlen senkrecht zueinander verlaufen, ist ein weiterer Umlenkspiegel 28 vorgesehen, der den zweiten Nutzstrahl 22a in einen umgelenkten Nutzstrahl 22a' umwandelt. Dieser verläuft in diesem Ausführungsbeispiel nahezu parallel zu dem ersten Nutzstrahl 12a, so daß insgesamt eine größere Fläche auf dem LCD-Lichtventil 14 beleuchtet werden kann. Denkbar ist jedoch auch, daß der Umlenkspiegel 28 den zweiten Nutzstrahl 22a' derart umlenkt, daß die Lichtstrahlen 12a und 22a' eine gemeinsame Fläche beleuchten.

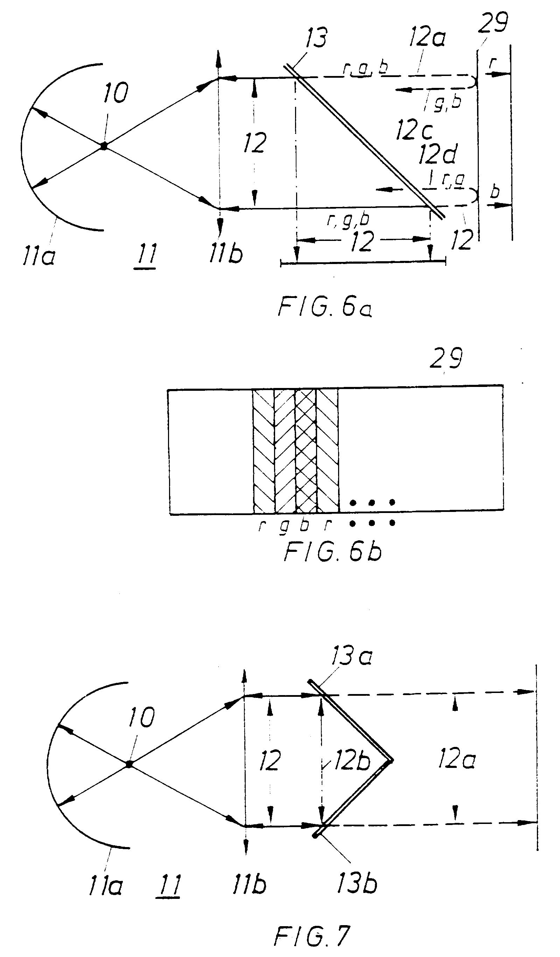

Ein weiteres Ausführungsbeispiel ist in Figur 6 dargestellt, welche die Figuren 6a und 6b enthält. Wesentlich bei diesem Ausführungsbeispiel ist, daß im Strahlengang des Nutzstrahles 12a ein Spiegel mit dichroitischen Spiegelelementen, wie in Figur 6b dargestellt, vorgesehen ist. Das Prinzip solcher Spiegelelemente beruht darauf, daß Strahlung bestimmter Wellenlänge durchgelassen wird, und die restliche Strahlung reflektiert wird. Ordnet man, wie in Figur 6b dargestellt, solche Spiegelelemente, jedoch für verschiedene Wellenlängenbereiche (Rot, Grün, Blau), nebeneinander streifenförmig an, und sind weiterhin die Ausmaße der genannten Streifen klein genug, so läßt sich auf diese Art ein Farbbild erzeugen.

In Figur 6a ist symbolisch dargestellt, wie der Nutzstrahl 12a auf den dichroitischen Spiegel 29 trifft. So wird von dem oberen Bereich des Nutzstrahles lediglich der Wellenlängenbereich für rotes Licht durchgelassen und die Wellenlängenbereiche für grünes und blaues Licht werden reflektiert, woraus der Lichtstrahl 12c entsteht. Im unteren Bereich des Nutzstrahles 12a wird der Wellenlängenbereich für blaues Licht durchgelassen und es wird der Lichtanteil für rotes und grünes Licht reflektiert, wodurch der Lichtstrahl 12d entsteht.

Die Spiegelelemente der verschiedenen Wellenlängenbereiche können ebenfalls in horizontal verlaufende Streifen oder sonstwie verlaufen. Derartige Verläufe zur Erzeugung von Farbbildern sind bekannt und es soll an dieser Stelle nicht näher darauf eingegangen werden.

Ein fünftes Ausführungsbeispiel mit abgewinkelten Polarisationsstrahlteilern 13a, 13b ist in Figur 7 dargestellt.

Wesentlich ist, daß der obere Teil des parallelen Lichtstrahles 12 durch den oberen Teil 13a des Polarisationsstrahlteilers aufgespalten wird in den Nutzstrahl 12a und in den Komplementärstrahl 12b, welcher anschließend durch Reflexion zu dem unteren Teil 13b des Polarisationsstrahlteilers gelangt. Von dort aus wird er zurückreflektiert zu dem Fokussiermittel 11 und erhält durch Durchstrahlung der rauhen Oberfläche des Glaskörpers der Lichtquelle 10 Komponenten der ersten Polarisationsrichtung. Durch den Hohlspiegel 11a wird der umgelenkte Komplementärstrahl derart zurückreflektiert, daß er anschließend wie der ursprüngliche Strahl 12 verläuft.

Der untere Teil des Strahles 12 wird durch den unteren Teil 13b des Polarisationsstrahlteilers aufgeteilt in den Nutzstrahl 12a und in den Komplementärstrahl 12b, der in diesem Fall zu dem oberen Teil 13a des Polarisationsstrahlteilers gelenkt wird und anschließend auf die Fokussiermittel 11.

Durch die abgewinkelte Anordnung des Polarisationsstrahlteilers kann ein zusätzlicher Umlenkspiegel erspart werden und es kann die benötigte Glasmenge um die Hälfte reduziert werden.

Bei den Ausführungsbeispielen gemäß der Figuren 5 bis 7 ist ebenfalls die Verwendung von Lambda-Viertel-Plättchen denkbar.

Zur Verminderung von Lichtverlusten bei der Beleuchtung von nicht-kreisförmigen Flächen, wie beispielsweise von LCD-Lichtventilen, die üblicherweise rechteckförmig mit einem Kantenverhältnis von 4:3 bzw. 16:9 gestaltet sind, ist zumindest eine der folgenden Varianten der genannten Ausführungsbeispiele vorteilhaft:
- in dem Verlauf der Strahlen 12 und/oder 12a konner. Spiegel vorgesehen sein, die einen Rahmen bilden, durch den Licht der gewünschten geometrischen Abmessungen durchgestrahlt werden kann. Die auf die Spiegel auftreffenden Strahlanteile werden in Richtung auf die betreffenden Fokussiermittel re-lektiert. Die den Rahmen bildenden Spiegel konnen in Abhängigkeit von der Art der verwendeten Fokussiermittel plan, sphärisch, elliptisch oder dergleichen ausgebildet sein;
- Teile der Fokussiermittel 11, 21 können derart ausgebildet sein, daß die erzeugten Lichtstrahlen einen nicht-kreisförmigen Querschnitt haben;
- Zwei oder mehrere der erzeugten Strahlen konnen derart auf die zu belichtenden Mittel gelenkt werden, daß die ausgeleuchtete Fläche zumindest annähernd der gewünschten Geometrie entspricht.

Weitere Kombinationen von Merkmalen der einzelnen Ausführungsbeispiele sind ebenfalls denkbar.

Versionen der genannten Ausführungsbeispiele können zumindest einzelne der folgenden Varianten aufweisen
- statt der angegebenen Fokussiermittel können andere dem Fachmann bekannte Mittel benutzt werden. Denkbar ist beispielsweise die Verwendung von elliptisch geformten Hohlspiegeln. In einem ihrer Brennpunkte kann eine Lichtquelle angeordnet sein, und der andere Brennpunkt fällt mit dem Brennpunkt einer nachgeschalteter Linse überein. Dadurch können ebenfalls parallele Strahlen 12 bzw. 22 erzeugt werden. Es bleibt jedoch zu berücksichtigen, daß für eine Drehung von Polarisationsebenen mit Hilfe von Reflexionen an planen Oberflächen, zirkular polarisiertes Licht eine ungeradzahlige Anzahl von derartigen Reflexionen durchführen muß;
- Als Polarisationsstrahlteilern (PBS) können cholesterische Flüssigkristallfilter verwendet werden;
- falls Mittel mit elliptisch (zirkular) polarisiertem Licht beleuchtet werden sollen, so können zusätzliche entsprechende Mittel, wie beispielsweise Lambda-Viertel-Plättchen im Strahlengang der Nutzstrahlen, vorgesehen werden;
- die rauhe Oberfläche, durch welche eine Verursachung von Komponenten der ersten Polarisationsrichtung erfolgt, kann anstatt durch den bzw. die Lampenkörper an anderen Mitteln zur Umlenkung vorgesehen sein. In diesem Sinne sind Mittel zu verstehen, die Licht reflektieren, brechen oder ihm sonstwie einen diffusen Verlauf verleihen;
- es können mehr als zwei Lichtquellen vorgesehen sein. Diese können durch Steuermittel derart angesteuert werden, daß die Belastung der einzelnen Lichtquelle reduziert wird;
- die Winkel zwischen Einfallsstrahlen und Polarisationsmitteln können derart bestimmt werden, daß der Reflexionsgrad bzw. Polarisationsgrad der Strahlteiler beispielsweise unter Beachtung des Brewster-Winkels optimiert wird,
- es können mehr als zwei Teilstrahlen gebildet werden und jedes Lichtventil mit mindestens drei Teilstrahlen ausgeleuchtet wird,
- es können kalte Spiegel verwendet werden, die sichtbare Wellenlängen anders ablenken als Infrarotstrahlung und so eine überhitzung des Systems verhindern.

Somit wird erfindungsgemäß eine Einrichtung zur Beleuchtung mit linear oder elliptisch polarisierten Licht vorgeschlagen, die es erlaubt, die Zuverlässigkeit gegenüber bekannten Systemen zu verbessern.

Das wird zum einem dadurch erreicht, daß auf kostspielige und stark wellenlängenabhängige Mittel zur Umwandlung von linear polarisierten Licht in zirkular polarisiertes Licht verzichtet wird, welche als empfindlich und störanfällig gelten.

Stattdessen wird eine Umlenkung, wie durch Reflexion und Brechung an einer störunanfälligen rauhen Oberfläche vorgesehen. Eine derartige Oberfläche steht bei einigen Lampen, die als Lichtquelle dienen, zur Verfügung, so daß sogar Mittel eingespart werden können.

Durch Verwendung von zwei Lichtquellen mit eigenen Fokussiermitteln wird bei Ausfall eines Beleuchtungszweiges der Betrieb der erfindungsgemäßen Einrichtung weiterhin sichergestellt.

Dazu können in einer Weiterbildung zusätzlich Steuermittel eingesetzt werden, welche bei Bedarf Betriebszustände, wie Gesamtbetriebszeit einzelner Lichtauellen usw., sowie Fehlerzustände anzeigen.

Erfolgt eine Beleuchtung mit nicht-kreisförmigen Strahlen, die beispielsweise durch geeignete Fokussiersysteme oder durch Parallelverläufe von an sich kreisförmigen Strahlen erzeugt werden können, so können insbesondere Lichtventile mit rechteckförmigen Abmaßen (4:3, 16:9) mit geringeren Verlusten ausgeleuchtet werden.

Weitere Varianten, wie beispielsweise die Verwendung von dichroitischen Spiegelelementen und abgewinkelten Polarisationsmitteln führen zu weiteren Einsparungen von Ablenkmitteln.

Es wird somit eine Beleuchtungsvorrichtung vorgestellt, die beispielsweise einem Projektionssystem zugeordnet sein kann, das mindestens ein Lichtventil enthält. Die erfindungsgemäße Beleuchtungsvorrichtung ist dadurch ausgezeichnet, daß aus dem Licht mindestens einer Lampe, mehrere Teilstrahlen gebildet werden, wovon ein, zwei oder mehrere einem Lichtventil zugeführt werden können.

Damit ergibt sich zunächst der Vorteil geringerer Lichtverluste und einer gleichmäßigeren Ausleuchtung der Lichtventile.

Werden mindestens zwei Lampen verwendet, deren Lichtstrahlen derart umgeformt werden, daß die beiden Teilstrahlen Lichtanteile jeder Lampe enthalten, so ergibt sich weiterhin der Vorteil, daß bei Ausfall einer Lampe die Funktion des Beleuchtungssystems weiterhin gewährleistet ist.

## Patentansprüche

1. Einrichtung zur Beleuchtung eines Gegenstandes (14) mit polarisierten Licht mit
wenigstens einer ersten Lichtquelle (10);
ersten Fokussiermitteln (11), die einen Hohlspiegel (lla) aufweisen, wobei die Fokussiermitteln das Licht der ersten Lichtquelle (10) bündeln;
ersten Polarisationsmitteln (13), die das gebündelte Licht der ersten Lichtquelle aufspalten in eine den gegenstand (14) beleuchtende Nutzstrahlunq (12a), welche eine erste Polarisationsrichtung aufweist, und in eine Komplementärstrahlung (12b), welche eine zweite Polarisationsrichtung aufweist;
Reflexionsmitteln (15,21a), die die Komplementärstrahlung der ersten Lichtquelle zum Polarisationsstrahlteiler (13) zurückreflektieren; und mit
Mitteln (10,20), die die vom Polarisationsstrahlteiler (13) zurückreflektierte Komplementärstrahlung empfangen und deren Polarisationsrichtung derart ändern, daß sie zumindest teilweise der ersten Polarisationsrichtung entspricht,
dadurch gekennzeichnet, daß
die Mittel (10,20), die die Polarisationsrichtung der zurückreflektierten Komplementärstrahlung ändern, eine rauhe Oberfläche haben, die Unebenheiten aufweist mit Abmessungen, deren Größenordnung oberhalb der Wellenlänge des verwendeten Lichtes liegt, und die die zurückreflektierte Komplementärstrahlung streuen.

2. Einrichtung zur Beleuchtung nach Anspruch 1, **dadurch gekennzeichnet**, daß zusätzlich eine zweite Lichtquelle (20) vorgesehen ist mit eigenen zweiten Fokussiermitteln (21) , die einen Hohlspiegel (21a) aufweisen, wobei die zweiten Fokussiermittel das Licht der zweiten Lichtquelle (20) bündeln;
zweiten Polarisationsmitteln (23), die das gebündelte Licht der zweiten Lichtquelle aufspalten in eine den Gegenstand (14) beleuchtende Nutzstrahlung (22a), welche die erste Polarisationsrichtung aufweist, und in eine Komplementärstrahlung (22b), welche die zweite Polarisationsrichtung aufweist, und daß die Komplementärstrahlung (12b) der ersten Lichtquelle (10) mittels der zweiten Fokussierungmittel (21) und die Komplementärstrahlung (22b) der zweiten Lichtquelle (20) mittels der ersten Fokussiermittel (11) umgelenkt wird.

3. Einrichtung zur Beleuchtung nach Anspruch 1 oder 2, dadurch gekennzeichnet, daß die Mittel mit einer rauhen Oberfläche durch Lampenkolben der mindestens einen Lichtquelle (10, 20) gebildet werden.

4. Einrichtung zur Beleuchtung nach einem der Ansprüche 1 - 3, **dadurch gekennzeichnet**, daß der Polarisationsstrahlteiler (13, 23) durch ein cholesterisches Element gebildet wird.

5. Einrichtung zur Beleuchtung nach einem der Ansprüche 2 bis 4, dadurch gekennzeichnet, daß mindestens eine erste Lichtquelle (10) und eine zweite Lichtquelle (20) vorgesehen sind, die durch Schaltmittel (10a, 20a, 17, 18) derart angesteuert werden, daß alternierend die erste Lichtquelle (10) oder die zweite Lichtquelle (20) eingeschaltet werden.

6. Einrichtung zur Beleuchtung nach einem der Ansprüche 2 bis 5, dadurch gekennzeichnet, daß mindestens eine erste Lichtquelle (10) und eine zweite Lichtquelle (20) vorgesehen sind, deren Nutzstrahlungen (12a bzw. 22a) unterschiedliche Polarisationsrichtungen aufweisen, und daß Steuermittel (17) die Lichtquellen (10, 20) derart ansteuern, daß entweder die Nutzstrahlung (12a bzw. 22a) der einen oder die Nutzstrahlung (22a bzw. 12a) der anderen Polarisationsrichtung auf die zu beleuchtenden Mittel (14) gelenkt wird.

7. Einrichtung zur Beleuchtung nach einem der Ansprüche 1 bis 6, dadurch gekennzeichnet, daß die Polarisationsstrahlteiler (13, 23) Spiegelelemente (29) aufweisen, welche jeweils transparent sind für Lichtanteile eines vorgegebenen Nutz-Wellenlängenbereichs und Lichtanteile anderer Komplementär-Wellenlängenbereiche reflektieren.

8. Einrichtung zur Beleuchtung nach Anspruch 7, dadurch gekennzeichnet, daß Spiegelelemente (29) für verschiedene Nutz-vellenlängenbereiche vorgesehen sind.

9. Einrichtung zur Beleuchtung nach einem der Ansprüche 1 bis 8, dadurch gekennzeichnet, daß ein Lichtsensor (16) vorgesehen ist, dessen Ausgangssignal ein Maß ist für die Intensität des von der wenigstens einen Lichtquelle (10) abgegebenen Lichtes und daß ein Steuergerät (17) vorgesehen ist, dem das Signal des Lichtsensors (16) zugeführt wird und das bei Unterschreiten einer vorgegebenen Lichtintensität bei einer maximalen Leistungsansteuerung der mindestens einen Lichtquelle (10) ein Alarmsignal abgibt.

10. Einrichtung zur Beleuchtung mit polarisierten Licht nach einem der Ansprüche 1 bis 9, dadurch gekennzeichnet, daß Mittel (28) vorgesehen sind, die aus dem von den Fokussiermitteln (11, 21) gebündelten Licht mindestens zwei Teilstrahlen (12a, 22a) bilden, und diese auf die zu beleuchtenden Mittel (14) lenken.

11. Einrichtung zur Beleuchtung mit polarisierten Licht nach einem der Ansprüche 1 bis 10, dadurch gekennzeichnet, daß die Polarisationsstrahlteiler (13, 23) als abgewinkelte Polarisationsstrahlteiler (13a, 13b) ausgebildet sind.

12. Einrichtung zur Beleuchtung nach einem der Ansprüche 1 bis 11, dadurch gekennzeichnet, daß Mittel vorgesehen sind, die eine überhitzung der Einrichtung und/oder der zu beleuchtenden Mittel (14) vermeiden.

13. Einrichtung zur Beleuchtung nach einem der Ansprüche 1 bis 12, dadurch gekennzeichnet, daß die zu beleuchtenden Mittel (14) zwei oder mehr Lichtventile aufweisen.

14. Einrichtung zur Beleuchtung nach einem der Ansprüche 1 bis 13, dadurch gekennzeichnet, daß Spiegelmittel in dem Strahlengang der Nutzstrahlen (12a, 22a) vorgesehen sind, die einen Rahmen bilden, dessen öffnung im wesentlichen der Geometrie der zu beleuchtenden Mittel (14) entspricht.

15. Einrichtung zur Beleuchtung eines Gegenstandes mit elliptisch oder zirkular polarisiertem Licht mit einer Einrichtung nach einem der Ansprüche 1-3, die im Stahlengang der Nutzstrahlung (12a) mittel zum Umwandeln der polarisiertem nutzstahlung (12a) in elliptisch oder zirkular polarisiertes Licht aufweist.

## Claims

1. A device for illuminating an object (14) with polarized light having
at least one first light source (10);
first focusing means (11) which comprise a concave mirror (11a), where the focusing means focus the light of the first light source (10);
first polarisation means (13) which split the focused light of the first light source into a useful beam (12a) which illuminates the object (14) and possesses a first polarization direction, and into a complementary beam (12b) which possesses a second polarization direction;
reflection means (15, 21a) which reflect back the complementary beam of the first light source to the polarization beam splitter (13); and
means (10, 20) which receive the complementary beam reflected back from the polarization beam splitter (13) and change the polarization direction thereof in such manner that it corresponds at least partially to the first polarization direction,
characterised in that
the means (10, 20) which change the polarization direction of the reflected-back complementary beam possess a rough surface which has unevenness with dimensions whose order of magnitude is above the wavelength of the light which is used and which diffuse the reflected back complementary beam.

2. An illuminating device as claimed in Claim I, characterised in that additionally a second light source (20) is provided having its own second focusing means (21) which comprise a concave mirror (21a), where the second focusing means focus the light of the second light source (20), and second polarization means (23) which split the focused light of the second light source into a useful beam (22a) which illuminates the object (14) and possesses the first polarization direction, and a complementary beam (22b) which possesses the second polarization direction, and that the complementary beam (12b) of the first light source (10) is deflected by means of the second focusing means (21) and the complementary beam (22b) of the second light source (20) is deflected by means of the first focusing means (11).

3. An illuminating device as claimed in Claim 1 or 2, characterised in that the means with a rough surface are formed by light bulbs of the at least one light source (10, 20).

4. An illuminating device as claimed in one of Claims 1 - 3, characterised in that the polarization beam splitter (13, 23) is formed by a cholesteric element.

5. An illuminating device as claimed in one of Claims 2 to 4, characterised in that at least one first light source (10) and one second light source (20) are provided which are controlled by switching means (10a, 20a, 17, 18) in such manner that the first light source (10) or the second light source (20) are switched on in alternation.

6. An illuminating device as claimed in one of Claims 2 to 5, characterised in that at least one first light source (10) and one second light source (20) are provided, the useful beams (12a and 22a) of which possess different polarization directions, and that control means (17) control the light sources (10, 20) in such manner that either the useful beam (12a or 22a) of the one polarization direction or the useful beam (22a or 12a) of the other polarization direction is directed onto the means (14) to be illuminated.

7. An illuminating device as claimed in one of Claims 1 to 6, characterised in that the polarization beam splitters (13, 23) comprise reflecting elements (29) which are in each case transparent to light components of a given useful wavelength range and reflect light components of other complementary wavelength ranges.

8. An illuminating device as claimed in Claim 7, characterised in that reflecting elements (29) are provided for different useful wavelength ranges.

9. An illuminating device as claimed in one of Claims 1 to 8, characterised in that a light sensor (16) is provided, the output signal of which is a gauge of the intensity of the light emitted from the at least one light source (10), and that a control device (17) is provided which is supplied with the signal of the light sensor (16) and which emits an alarm signal on the undershooting of a given light intensity in the case of a maximum power actuation of the at least one light source (10).

10. An illuminating device using polarised light according to one of Claims 1 to 9, characterised in that means (28) are provided which, from the light focused by the focusing means (11, 21), form at least two sub-beams (12a, 22a) and direct the latter onto the means (14) to be illuminated.

11. An illuminating device using polarised light as claimed in one of Claims 1 to 10, characterised in that the polarization beam splitters (13, 23) have the form of angled polarization beam splitters (13a, 13b).

12. An illuminating device as claimed in one of Claims 1 to 11, characterised in that means are provided which avoid the overheating of the device and/or of the means (14) to be illuminated.

13. An illuminating device as claimed in one of Claims 1 to 12, characterised in that the means (14) to be illuminated comprise two or more light valves.

14. An illuminating device as claimed in one of Claims 1 to 13, characterised in that reflecting means are provided in the beam path of the useful beams (12a, 22a), which reflecting means form a frame, the opening of which corresponds substantially to the geometry of the means (14) to be illuminated.

15. A device for illuminating an object with elliptically or circularly polarized light, having a device according to one of claims 1 to 3, which has in the beam path of the useful beam (12a) means to convert the polarized useful beam (12a) into elliptically or circularly polarized light.

## Revendications

1. Disposition pour l'éclairage d'un objet (14) par une lumière polarisée, comportant
au moins une première source lumineuse (10);
des premiers moyens de focalisation (11) intégrant un miroir concave (11a), lesdits moyens de focalisation concentrant la lumière de ladite première source lumineuse (10);
des premiers moyens de polarisation (13) qui séparent le faisceau lumineux de la première source lumineuse en un faisceau utile (12a) éclairant ledit objet (14) et possédant un premier sens de polarisation, et en un faisceau complémentaire (12b) possédant un second sens de polarisation;
des moyens de réflexion (15, 21a) réfléchissant le faisceau complémentaire de la première source lumineuse vers le séparateur de faisceau à polarisation (13) ; et comportant
des moyens (10, 20) recevant le faisceau complémentaire réfléchi par le séparateur de faisceau à polarisation (13) et modifiant son sens de polarisation de telle manière qu'il corresponde pour le moins partiellement au premier sens de polarisation,
dispositif **caractérisé en ce** que
lesdits moyens (10, 20) modifiant le sens de polarisation dudit faisceau complémentaire réfléchi, possèdent une surface rugueuse présentant des aspérités dont les dimensions sont d'un ordre supérieur à la longueur d'onde de la lumière utilisée, et qui dispersent le faisceau complémentaire réfléchi.

2. Dispositif d'éclairage selon la revendication 1 **caractérisé en ce** qu'il comporte en outre une seconde source lumineuse (20) possédant
des seconds moyens de focalisation (21) qui lui sont propres et qui comprennent un miroir concave (21a), lesdits seconds moyens de focalisation servant à concentrer la lumière de la seconde source lumineuse (20) ;
des seconds moyens de polarisation (23) qui séparent le faisceau de la seconde source lumineuse en un faisceau utile (22a) éclairant ledit objet (14) et possédant le premier sens de polarisation, et en un faisceau complémentaire (22b) qui possède le second sens de polarisation,
et **caractérisé en outre en ce** que
le faisceau complémentaire (12b) de la première source lumineuse (10) est dévié par l'intermédiaire desdits seconds moyens de focalisation (21), tandis que le faisceau complémentaire (22b) de la seconde source lumineuse (20) est dévié par l'intermédiaire desdits premiers moyens de focalisation (11).

3. Dispositif d'éclairage selon l'une quelconque des revendications 1 ou 2 **caractérisé en ce** que lesdits moyens possédant la surface rugueuse sont constitués par les ampoules des sources lumineuses (10, 20) dont l'une au moins est prévue.

4. Dispositif d'éclairage selon l'une quelconque des revendications 1 à 3 **caractérisé en ce** que ledit séparateur de faisceau à polarisation (13, 23) est un élément cholestérique.

5. Dispositif d'éclairage selon l'une quelconque des revendications 2 à 4 **caractérisé en ce** qu'il comporte au moins une première source lumineuse (10) et une seconde source lumineuse (20) qui sont commandées par des moyens de commutation (10a, 20a, 17, 18) de telle manière que ladite première source lumineuse (10) ou ladite seconde source lumineuse (20) soient allumées alternativement.

6. Dispositif d'éclairage selon l'une quelconque des revendications 2 à 5 **caractérisé en ce** qu'il comporte qu'il comporte au moins une première source lumineuse (10) et une seconde source lumineuse (20) dont les faisceaux utiles (12a ou 22a) présentent des sens de polarisation différents, et que des moyens de commande (17) activent les sources lumineuses (10, 20) de telle manière que le faisceau utile (12a ou 22a) d'un sens de polarisation ou le faisceau utile (22a ou 12a) de l'autre sens de polarisation soit dirigé sur les moyens à éclairer (14).

7. Dispositif d'éclairage selon l'une quelconque des revendications 1 à 6 **caractérisé en ce** que les séparateurs de faisceau à polarisation (13, 23) comprennent des éléments miroirs (29) qui sont transparents pour les portions de lumière comprises dans une plage définie de longueurs d'onde utiles et réfléchissant pour les portions de lumières comprises dans une plage de longueurs d'onde complémentaires.

8. Dispositif d'éclairage selon la revendication 7 **caractérisé en ce** que lesdits éléments miroirs (29) sont prévus pour différentes plages de longueurs d'onde utiles.

9. Dispositif d'éclairage selon l'une quelconque des revendications 1 à 8 **caractérisé en ce** qu'il comprend un capteur photo-électrique (16) dont le signal de sortie constitue une mesure de l'intensité de la lumière émise par au moins une source lumineuse (10), et qu'il présente en outre un appareil de commande (17) qui reçoit le signal dudit capteur photo-électrique (16) et qui émet un signal d'alarme dès que l'intensité lumineuse est inférieure à une valeur définie malgré la puissance maximale appliquée à ladite source lumineuse (10) au moins.

10. Dispositif d'éclairage à la lumière polarisée selon l'une quelconque des revendications 1 à 9 **caractérisé en ce** qu'il comporte des moyens (28) qui séparent la lumière concentrée par lesdits moyens de focalisation (11, 21) en au moins deux faisceaux partiels (12a, 22a) et qui orientent ceux-ci sur les moyens à éclairer (14).

11. Dispositif d'éclairage à la lumière polarisée selon l'une quelconque des revendications 1 à 10 **caractérisé en ce** que lesdits séparateurs de faisceau à polarisation (13, 23) sont conçus sous la forme de séparateurs de faisceau à polarisation (13a, 13b) disposés en angle.

12. Dispositif d'éclairage selon l'une quelconque des revendications 1 à 11 **caractérisé en ce** qu'il comporte des moyens prévenant un échauffement exagéré du dispositif et/ou des moyens à éclairer (14).

13. Dispositif d'éclairage selon l'une quelconque des revendications 1 à 12 **caractérisé en ce** que les moyens à éclairer (14) présentent deux ou plusieurs modulateurs de lumière.

14. Dispositif d'éclairage selon l'une quelconque des revendications 1 à 13 **caractérisé en ce** que des moyens miroirs sont placés dans les trajets des faisceaux utiles (12a, 22a), qui constituent un cadre dont l'ouverture correspond, pour l'essentiel, à la géométrie des moyens à éclairer (14).

15. Dispositif d'éclairage d'un objet par une lumière à polarisation elliptique ou circulaire, comportant un dispositif selon l'une quelconque des revendications 1 à 3 qui possède des moyens, placés dans le trajet du faisceau utile (12a), servant à transformer le faisceau utile (12a) polarisé en un faisceau à polarisation elliptique ou circulaire.
